# EUROPEAN PATENT SPECIFICATION

(11) **EP 4 450 891 B1**
(45) Date of publication and mention of the grant of the patent: **24.06.2026**
(21) Application number: 24166182.6
(22) Date of filing: 26.03.2024
(51) Int. Cl.: F24F 13/30, F24F 12/00

(54) **VENTILATION EQUIPMENT AND METHOD OF OPERATING VENTILATION EQUIPMENT**
LÜFTUNGSAUSRÜSTUNG UND VERFAHREN ZUM BETRIEB DER LÜFTUNGSAUSRÜSTUNG
ÉQUIPEMENT DE VENTILATION ET PROCÉDÉ DE FONCTIONNEMENT D'ÉQUIPEMENT DE VENTILATION

(30) Priority: 14.04.2023 FI 20235425
(43) Date of publication of application: 23.10.2024
(73) Proprietor: Thyronis Group Oy, 85200 Alavieska (FI); Klemola Group Oy, 69700 Veteli (FI); Peltisepänliike Nykänen Oy, 69700 Veteli (FI)
(72) Inventor: HAAPAKOSKI, Mikko, 85200 Alavieska (FI); KLEMOLA, Marko, 69700 Veteli (FI); NYKÄNEN, Matti, 69700 Veteli (FI)
(74) Representative: Berggren Oy

(56) References cited:
- EP-A1- 3 683 508
- EP-B1- 3 377 825
- WO-A1-2004/072560

## Description

### FIELD OF THE INVENTION

The invention relates to a ventilation equipment comprising a supply convector and a supply fan arranged to the flow path of the supply air, an exhaust convector and an exhaust fan arranged to the flow path of the exhaust air, a heat transfer pipework connecting the supply convector and the exhaust convector, the heat transfer pipework comprising a first pump and valves in order to circulate heat transfer fluid through the supply convector and the exhaust convector, and a control device for controlling the operation of the supply fan and the exhaust fan, the valves and the first pump. The invention also relates to a method of operating a ventilation equipment.

### PRIOR ART

The energy efficiency of ventilation systems is improved by heat recovery equipment which preheat the incoming supply air with heat energy recovered from the exhaust air. Especially in large buildings, ventilation systems are used which have an exhaust convector through which the exhaust air is blown by means of an exhaust fan and a supply convector through which the supply air is sucked by means of a supply fan. The supply convector and the exhaust convector are connected to each other by heat transfer pipework so that the heat transfer fluid heated by the exhaust air is led from the exhaust convector to the supply convector, where it heats the supply air flow. From the supply convector the cooled heat transfer fluid returns to the exhaust convector. The heat transfer fluid used in the ventilation equipment described above is typically a glycol or an aqueous glycol solution.

Documents FI129633 B and SE 514849 C2 describe ventilation equipment that operate in the above-described manner. The weakness of these solutions, which works well per se, is that despite the heat recovery, a large amount of heat energy is lost with the exhaust air. Especially in cold weather, more energy is required to heat the supply air than can be recovered from the exhaust air.

Document EP 3809050 A1 describes a hybrid heating system comprising a geothermal circuit as the main heat source, a heat pump, a supply air unit connected to a heat recovery circuit and an exhaust air unit. In the described solution, the "additional thermal energy" needed to heat the supply air in mid-winter is taken from the geothermal circuit.

Document WO 2004/072560 A1 discloses a device for recovering energy from the outgoing air, the device containing the features of the preamble of claim 1.

An object of the invention is to provide ventilation equipment and a method of operating ventilation equipment with which the problems related to the prior art can be reduced. The objects of the invention are obtained with a ventilation equipment and a method which are characterised in what is presented in the independent claims. Some advantageous embodiments of the invention are presented in the dependent claims.

### BRIEF DESCRIPTION OF THE INVENTION

The invention relates to ventilation equipment comprising a supply convector and a supply fan arranged to the flow path of the supply air, an exhaust convector and an exhaust fan arranged to the flow path of the exhaust air, a heat transfer pipework connecting the supply convector and the exhaust convector, the heat transfer pipework comprising a first pump and valves in order to circulate heat transfer fluid through the supply convector and the exhaust convector, and a control device for controlling the operation of the said supply fan and the exhaust fan, the valves and the first pump. Said ventilation equipment includes additionally a recovery convector arranged to the flow path of the exhaust air, a heat pump comprising a first energy exchanger and a second energy exchanger, which first energy exchanger is connected to the recovery convector with recovery pipework and which second energy exchanger is connected to the said heat transfer pipework.

In a preferred embodiment of the ventilation equipment according to the invention, the recovery pipework has a second pump and a third valve for adjusting the flow rate of the liquid circulating in the recovery pipework.

In another preferred embodiment of the ventilation equipment according to the invention, the said recovery convector is arranged on the flow path of the exhaust air in the flow direction of the exhaust air after the exhaust convector.

In a third preferred embodiment of the ventilation equipment according to the invention, the second energy exchanger is connected to the said heat transfer pipework in the flow direction of the heat transfer fluid in front of the supply convector.

In yet another preferred embodiment of the ventilation equipment according to the invention, the heat pump can be set into heating mode in which the heat pump is configured to receive heat energy from the recovery pipe with the first energy exchanger and to release heat energy to the heat transfer pipework with the second energy exchanger.

In yet another preferred embodiment of the ventilation equipment according to the invention, the heat pump can be set into cooling mode in which the heat pump is configured to receive heat energy from the heat transfer pipework with the second energy exchanger and to release heat energy to the recovery pipework with the first energy exchanger.

In yet another preferred embodiment of the ventilation equipment according to the invention, said heat pump comprises a refrigerant pipework connecting the first energy exchanger and the second energy exchanger for circulating refrigerant and for changing and setting the flow direction of the refrigerant of the shuttle valve.

In yet another preferred embodiment of the ventilation equipment according to the invention, said heat transfer pipework comprises a first intermediate pipe and a first valve for directing the heat transfer fluid to flow past the supply convector when the heat pump is in cooling mode.

Preferably, said heat transfer pipework comprises additionally a second intermediate pipe and a second valve for directing the heat transfer fluid to flow past the exhaust convector.

Yet another preferred embodiment of the ventilation equipment according to the invention comprises additionally a first thermometer for measuring the temperature of the heat transfer fluid flowing to the exhaust convector and a second thermometer for measuring the temperature of the exhaust air that has flowed through the exhaust convector and the said control device is configured to direct the heat transfer fluid to flow past the exhaust convector if the temperature of the heat transfer fluid flowing to the exhaust convector is higher than the temperature of the exhaust air that has flowed through the exhaust convector.

In the method related to the invention, in order to use the ventilation equipment according to the invention, exhaust air is led out of the building through the exhaust convector and the recovery convector, supply air is led into the building through the supply convector and heat transfer fluid is circulated in the heat transfer pipework. In the method, the temperature of the heat transfer fluid flowing to the supply convector is raised or lowered by using the heat pump. Preferably, when raising the temperature of the heat transfer fluid flowing to the supply convector, the heat pump is set to heating mode, in which the refrigerant circulates in the first flow direction in the heat pump, and when lowering the temperature of the heat transfer fluid flowing to the supply convector, the heat pump is set to cooling mode in which the refrigerant circulates in the second flow direction in the heat pump.

In a preferred embodiment of the method according to the invention, a target temperature is set for the supply air that has flowed through the supply convector, the actual temperature of the supply air that has flowed through the supply convector is measured and the operation of the equipment is controlled so that the measured temperature of the supply air comes close to the target temperature.

In another preferred embodiment of the method according to the invention, heat transfer fluid is directed to flow past the exhaust convector when the heat pump is in cooling mode.

An advantage of the invention is that it is energy efficient because the heat energy of the exhaust air can be efficiently utilised in heating the supply air.

Furthermore, an advantage of the invention is that the same heat pump belonging to the equipment can be used for heating the supply air in winter and for cooling the supply air in summer.

It is a further advantage of the invention that its structure is simple, and its manufacturing costs are inexpensive.

### BRIEF DESCRIPTION OF THE DRAWINGS

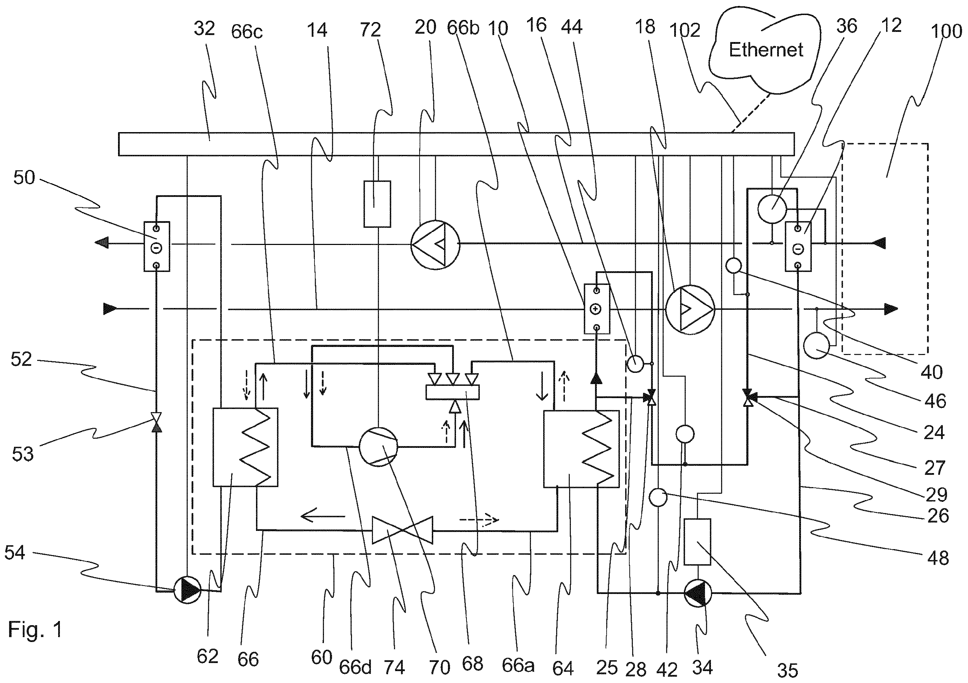

In the following, the invention will be described in detail. In the description, reference is made to the appended drawing, in which figure 1 shows by way of an example a ventilation equipment according to the invention as a schematic view.

### DETAILED DESCRIPTION OF THE INVENTION

Fig. 1 shows by way of example a ventilation equipment according to the invention in a simplified schematic view. The ventilation equipment includes a supply convector 10 arranged in the supply air flow 14 flowing in the ventilation ductwork of a building 100, and an exhaust convector 12 arranged in the exhaust air flow 16. In the supply air flow, there is also a supply fan 18, which sucks supply air from outside the building into the building along a supply duct so that the supply air flows through the supply convector. The supply fan is placed in the supply duct after the supply convector with reference to the supply air flow direction. Correspondingly, there is in the exhaust air flow 16 an exhaust fan 20 by means of which exhaust air is blown from inside the building to the outside of the building along an exhaust duct so that the exhaust air flows through the exhaust convector 12. The exhaust fan is placed in the exhaust duct in the exhaust air flow direction after the exhaust convector. The supply and exhaust convectors are liquid-circulating convectors with a flow pipework inside, with a first inlet connection at a first end and an outlet connection at a second end. On the outer surface of the flow pipework there are lamellae that contribute to the heat transfer between the air flowing through the convectors and the heat transfer fluid flowing in the flow pipework. The supply convector 10 is a so-called hybrid convector which can serve both as a heating device and a cooling device for the flowing air, depending on the temperature of the heat transfer fluid led into the flow pipework of the convector. The supply and exhaust convectors as such are prior art, so their structure will not be described in more detail here.

The outlet connection of the supply convector is connected to the inlet connection of the exhaust convector 12 with the first pipe 24, and the inlet connection of the supply convector is connected to the outlet connection of the exhaust convector with the second pipe 26 so that a flow route for the heat transfer fluid through the supply and exhaust convectors is formed. The first and the second pipe are connected to each other with a first intermediate pipe 25 so that the first end of the first intermediate pipe connects to the second pipe in the flow direction of the heat transfer fluid at the front part of the supply convector and the second end connects to the first pipe in the flow direction of the heat transfer fluid after the exhaust convector. At the junction of the first pipe and the intermediate pipe, there is a first valve 28 which is a so-called 3-way valve equipped with an actuator, the opening and closing of which is controlled by a control device 32. By using the first valve, the heat transfer fluid can thus be directed to flow entirely or partly along the first intermediate pipe 25 past the supply convector 10. The first valve 28 has a flowmeter to measure the flow of heat transfer fluid in the pipes connected to the valve.

The first and the second pipe are connected to each other additionally with a second intermediate pipe 27 so that the first end of the second intermediate pipe connects to the first pipe 24 in the flow direction of the heat transfer fluid on the front part of the exhaust convector 12 and the second end connects to the second pipe 26 in the flow direction of the heat transfer fluid after the exhaust convector. **In** the junction between the first pipe and the second intermediate pipe there is a second valve 29 which is a so-called 3-way valve equipped with an actuator, the opening and closing of which is controlled by control device 32. By using the second valve, the heat transfer fluid can thus be directed to flow entirely or partly along the second intermediate pipe 27 past the exhaust convector 12. In the second valve 29, there is a flowmeter which can be used for measuring the flowing of the heat transfer fluid in the pipes connected to the valve.

The second pipe 26 has a first pump 34 for circulating the heat transfer fluid in the pipes and the supply and exhaust convectors. The heat transfer fluid used in the ventilation equipment is typically glycol, an aqueous solution of glycol or a mixture of ethylene glycol. The rotational speed of the first pump is controlled by a first frequency converter 35. The valve, the first pump and the frequency converter are connected by wires to the control device 32 which controls their operation. In the exhaust air flow 16, in connection with the exhaust convector 12, there is a pressure difference sensor 36 which is used for measuring the air pressure on different sides or the exhaust convector. The pressure difference sensor and the supply and exhaust convectors 18, 20 are connected by wires to the control device 32 which controls operation of the fans and the valves.

The equipment additionally comprises three thermometers placed in the first pipe on the pipeline section between the supply convector and the exhaust convector. The first thermometer 40 is placed in the first pipe on the pipeline section between the second valve 29 and the exhaust convector, the second thermometer is placed on the pipeline section between the first and the second valve, and the third thermometer 44 is placed on the pipeline section between the supply convector 10 and the first valve. On the pipe section between the first pump 34 of the second pipe 26 and the supply convector there is additionally a fifth thermometer 48. The temperatures of the heat transfer fluid measured with the thermometers are used for calculating the energy consumption of the equipment. The equipment also comprises a fourth thermometer 46 for measuring the temperature of the supply air that has flowed through the supply convector 10. The fourth thermometer is placed in the supply air flow in the direction of the air flow after the supply convector 12.

The ventilation equipment according to the invention also includes a recovery convector 50 and a heat pump 60, which has a first energy exchanger 62 and a second energy exchanger 64. The recovery convector is arranged in the exhaust air flow 16 so that the exhaust air that has flowed through the exhaust convector flows through the recovery convector before exiting the ventilation equipment. The recovery convector is located in the exhaust airflow in the flow direction of the exhaust air after the exhaust fan and it is connected to the first energy exchanger by a recovery pipework 52 so that the recovery convector, the first energy exchanger and the recovery pipework form a closed liquid circulation circuit. The recovery pipework has a second pump 54 with which liquid is circulated in the recovery pipework and a third valve 53 equipped with a flowmeter. The third valve is a 2-way valve which is used for adjusting the flowing of liquid in the recovery pipework so that the flow rate is optimal both in the cooling mode and in the heating mode. By the entity formed by the recovery convector and the first energy exchanger, the aim is to achieve maximal cooling efficiency in the cooling mode and a maximal heating efficiency in the heating mode by adjusting the flowing speed. The operation of the third valve is controlled by a control device.

The second energy exchanger is connected to the second pipe 26 of the heat transfer pipework in the flow direction of the heat transfer fluid on the front part of the conjunction of the supply convector 10 and the first intermediate pipe 25. The heat transfer fluid flowing in the heat transfer pipework connecting the supply and exhaust convectors thus always flows through the second energy exchanger before flowing to the supply convector and/or to the first intermediate pipe.

In addition to the first and second energy exchanger, the heat pump includes a refrigerant pipework 66, a shuttle valve 68, a compressor 70 and an expansion valve 74. The refrigerant pipework comprises a third pipe 66a with the expansion valve 74 leading from the first energy exchanger 62 to the second energy exchanger, a fourth pipe 66b leading from the second energy exchanger to the shuttle valve, a fifth pipe 66c leading from the shuttle valve to the first energy exchanger and a circulation pipe 66d connected to the shuttle valve by its first and second end. Compressor 70 is connected to the circulation pipe on the section between its first and second end. The compressor is a so-called inverter compressor, the running speed of which is adjusted with the second frequency converter 72. The shuttle valve 68 is a so-called four-way valve by means of which the flow direction of the refrigerant in the refrigerant pipework of the heat pump can be changed. Depending on the flow direction of the refrigerant, the heat pump operates either in heating mode or in cooling mode. The heat pump additionally includes a droplet separator and a silencer arranged in the circulation pipe, and a refrigerant storage with necessary connection pipes and valves connected to the third pipe. These parts are not shown in the figure.

In heating mode, the second pump 54 is in operation, whereby heat energy is transferred from the exhaust airflow in the recovery convector to the liquid flowing in the recovery pipework 52 and further to the first energy exchanger 62. In the heat pump, the shuttle valve is adjusted to a position in which the vaporised refrigerant circulates from the first energy exchanger 62 along the fifth pipe 66c to the shuttle valve 68, from the shuttle valve along the circulation pipe 66d to the compressor 70 and back to the shuttle valve 68. As the refrigerant flows through the compressor, its pressure rises, whereby its temperature rises intensively. From the shuttle valve, the vaporised refrigerant continues along the fourth pipe 66b to the second energy exchanger in which the refrigerator releases heat energy to the heat transfer fluid flowing in the second pipe 26. Simultaneously, the refrigerant cools and condenses into liquid. The cooled refrigerant flows along the third pipe 66a through the expansion valve 74 back to the first energy exchanger 62 in which it heats up and vaporises, after which a new round starts. In other words, in the heating mode the first energy exchanger operates as a vaporiser and the second energy exchanger operates as a condenser. The flow direction of the heat transfer fluid in the refrigerant pipework of the heat pump in the heating mode is presented in the figure by arrows drawn with a continuous line.

When the heat pump is in cooling mode, the shuttle valve is adjusted to a position in which the refrigerant circulates from the first energy exchanger 62 along the third pipe 66a through the expansion valve 74 to the second energy exchanger 64 in which heat energy is transferred into the refrigerant from the heat transfer fluid flowing in the second pipe 26, whereby the refrigerant heats up and vaporises. From the second energy exchanger the refrigerant flows along the fourth pipe 66b to the shuttle valve 68, from the shuttle valve along the circulation pipe 66d to the compressor 70 and back to the shuttle valve 68. As the refrigerant flows through the compressor, its pressure and temperature rise. From the shuttle valve, the heated refrigerant continues along the fifth pipe 66c to the first energy exchanger in which heat energy from the refrigerant transfers to the heat transfer fluid flowing in the recovery pipework 52, whereby the refrigerant cools and condenses into a liquid and a new round starts. The heat energy transferred into the recovery pipework is released into the exhaust air flow with the help of the recovery convector 50. In other words, in the cooling mode, the first energy exchanger operates as a condenser and the second energy exchanger operates as a vaporiser. The flow direction of the heat transfer fluid in the refrigerant pipework of the heat pump in the cooling mode is presented in the figure by arrows drawn with a dashed line.

The control device 32 included in the ventilation equipment is a control unit known per se, equipped with programmable logic, with a possibility of connecting to a building automation system through connections in the control device. The control device housing has a main switch and a graphic touch screen which can be used to set parameters that control the operation of the equipment and to view quantities measured by the meters in the equipment. The control device can be connected to a remote-control device outside the building, such as a computer or mobile phone, through a wired or wireless communication connection 102.

The ventilation equipment according to the invention is operated in the following manner: When the ventilation equipment is in the normal operating mode, the supply and exhaust fans are running, whereby the supply air flows along the supply duct through the supply convector 10 inside the building 100, and the exhaust air flows along the exhaust duct through the exhaust convector 12 outside the building. If the temperature of the supply air flow 14 flowing through the supply convector is suitable, i.e. it does not need to be heated or cooled, the circulating pump 34 can be switched off, whereby no heat transfer fluid flows in the heat transfer pipework at all. The control device then controls the valve 28 to the "open" position, whereby the valve branch connected to the intermediate pipe 25 is closed.

When the equipment is in heating mode, a target temperature for the supply air flowing inside the building is set to the control device, which target temperature is measured with the fourth thermometer. In heating season, the target temperature can be for example 20°C. When the measured temperature of the supply air flow falls below the target temperature, i.e. there is a need to heat the air flowing through the supply convector, the control device 32 starts the first pump and adjusts its rotational speed to a preset minimum rotational speed. Information about the need for heating the supply air can also come from a building automation system connected to the control device, which monitors, among other things, the indoor temperature in the building. Based on the supply air flow heating need, the control device calculates the required flow through the supply convector and steplessly adjusts the valve 28 so that a first portion of the heat transfer fluid flows through the supply convector 10, heating the air flowing through the supply convector, and a second portion of the heat transfer fluid flows through the intermediate pipe 25, bypassing the supply convector. As the need for heating the supply air flow increases, the first portion is increased and the second portion is reduced until the valve 28 is fully open, so that all the heat transfer fluid flowing in the heat transfer pipework flows through both the supply convector and exhaust convector 12, and no heat transfer fluid flows in the intermediate pipe 25 at all.

When the supply air temperature falls low enough, the need for heating the supply air flow increases to such an extent that the set target temperature is not achieved despite all heat transfer fluid being directed to flow through the supply convector. In this case, the control device increases the rotational speed of the circulating pump 34 by means of the frequency converter 35 so that a sufficient flow of heat transfer fluid is achieved. The speed of the circulating pump can be steplessly adjusted to achieve the required flow rate.

When the temperature of the supply air continues to decrease, the heat energy recovered from the exhaust convector is not sufficient to heat the temperature of the supply air even if the first pump is operated on maximum rotation speed. In this case, heat pump 60 and the second pump 54 in the recovery pipework are started, whereby heat energy is transferred from the exhaust airflow to the first energy exchanger 64 through the recovery convector 50 and recovery pipework. The heat energy led to the heat pump is led through the energy exchanger to the heat transfer pipework to heat the heat transfer fluid flowing through the supply convector. The heat pump is used for raising the temperature of the heat transfer fluid flowing to the supply convector so that the measured temperature of the supply air that has flown through the supply convector would come close to the target temperature.

During the operation of the ventilation equipment according to the invention, pressure difference sensor 36 continuously measures the pressure difference across the exhaust convector 12 in the exhaust air flow 16. A limit value for the pressure difference is preset in the control device 32 of the ventilation equipment. The limit value refers to the maximum permissible value for the pressure difference across the exhaust convector, i.e. the maximum permissible value for the difference in air pressures measured by the first and second pressure sensors. The limit value can be adjusted and changed during operation of the equipment. Exhaust convectors have an inherent structural pressure drop. Structural pressure drop here means the pressure drop caused by the exhaust convector when the exhaust convector is completely "clean", i.e. there is no extra substance or material to increase the pressure drop between its lamellae. The limit value for the pressure difference can be set to twice the value of the structural pressure drop of the exhaust convector.

When the supply air temperature decreases, the temperature of the heat transfer fluid decreases in the supply convector, whereby heat transfer fluid flowing into the exhaust convector is cooler. A sufficiently low temperature of the heat transfer fluid makes the surfaces of the lamellae of the exhaust convector so cold that moisture in the exhaust air begins to condense on them, i.e. the lamellae begin to accumulate frost. The build-up of frost on the lamellae results in an increase in the pressure difference across the exhaust convector. When the measured pressure difference reaches the set limit value, the ventilation equipment enters a so-called defrost mode, whereby the control device 32 adjusts the first valve 28 so that a portion of the heat transfer fluid is directed to flow through the intermediate pipe 25 past the supply convector, reducing the proportion of heat transfer fluid flowing through the supply convector 10. In the defrost mode, the amount of heat transfer fluid flowing through the supply convector is steplessly reduced by a desired amount. The reduction in the flow of heat transfer fluid can be, for example, more than 50%, more than 70%, or even 90% from the pre-reduction level. In the defrost mode, the heat transfer fluid still circulates through the exhaust convector in its entirety, but due to the partial bypass of the supply convector, its temperature rises as the warm exhaust air flow through the exhaust convector raises the temperature of the exhaust convector lamellae. At the same time, the moisture condensed on the lamellae of the exhaust convectors dries out and flows out under the influence of the exhaust air flowing through.

The ventilation equipment remains in the defrost mode for a pre-set period of time set in the control device. The length of the preset period of time can be, for example, 10 to 15 minutes. A suitable length for the preset period of time can be selected during operation of the equipment. At the end of the preset period of time, the control device 32 returns the valve 28 to the pre-defrost mode position, whereby the ventilation equipment reverts to the normal operating mode.

When the need for heating the supply air flow decreases, the operation is reversed, i.e. the heat pump 60 and the second pump 54 of the recovery pipework are switched off first. When the need for heat further decreases, the rotation speed of the first pump is reduced to the minimum rotation speed, after which the amount of heat transfer fluid flowing through the supply convector is limited by the first valve 28.

If the indoor air temperature in the building is so high that there is no need to heat the supply air, the control unit can stop the first pump, whereby the circulation of the heat transfer fluid in the heat transfer pipework ceases. No more heat is transferred from the exhaust convector 12 to the supply convector 10, i.e. the heating of the supply air flow ceases. Especially in spring and autumn, conditions arise in which the outdoor air temperature of the building is lower than the indoor air temperature that is to be lowered. In this case, the supply air, which is cooler than the indoor air, flows through the supply convector into the building, cooling the indoor air.

As the need for cooling increases and/or the outdoor air temperature rises, the equipment can be set to operate in cooling mode in which the supply air flow is cooled by the heat pump 60. A target temperature is set to the control device and measured by the fourth thermometer 46. In summertime, the target temperature can be for example 15°C. Alternatively, the control device can obtain information on the cooling need from the building automation system connected to the control device, whereby the ventilation equipment enters the cooling mode.

In the cooling mode, the control device 32 adjusts the second valve 29 in a position where the heat transfer fluid is lead to travel along the second intermediate pipe 27 past the exhaust convector 12. When the ventilation equipment is in the cooling mode, the exhaust convector in in other words passed entirely, whereby no heat energy is transferred from the exhaust air flowing through the exhaust convector to the heat transfer fluid. The heat transfer fluid circulated thus only through the supply convector and the second energy exchanger. In the cooling mode, the control device starts the first pump 34, the second pump 54 and the heat pump 60, whereby heat is transferred from the heat transfer fluid flowing in the heat transfer pipework to the recovery pipework 52 through the heat pump 60 and further to the exhaust airflow through the recovery convector 50, whereby the temperature of the heat transfer fluid flowing to the supply convector decreases. The temperature of the heat transfer fluid flowing to the supply convector is lower than the outdoor air temperature, whereby the temperature of the supply air flowing through the supply convector decreases near to the set target temperature. The cooling capacity of the equipment is adjusted by controlling the operation of the third valve so that the measured temperature of the supply air sets as close as possible to the set target temperature.

Some advantageous embodiments of the ventilation equipment and method according to the invention have been described above. The invention is defined by the appended claims.

### List of reference numbers:

| | | | |
|---|---|---|---|
| 10 | supply convector | 48 | fifth thermometer |
| 12 | exhaust convector | 50 | recovery convector |
| 14 | supply air flow | 52 | recovery pipework |
| 16 | exhaust air flow | 53 | third valve |
| 18 | supply fan | 54 | second pump |
| 20 | exhaust fan | 60 | heat pump |
| 24 | first pipe | 62 | first energy exchanger |
| 25 | first intermediate pipe | 64 | second energy exchanger |
| 26 | second pipe | 66 | refrigerant pipework |
| 27 | second intermediate pipe | 66a | third pipe |
| 28 | first valve | 66b | fourth pipe |
| 29 | second valve | 66c | fifth pipe |
| 32 | control device | 66d | circulation pipe |
| 34 | first pump | 68 | shutter valve |
| 35 | first frequency converter | 70 | compressor |
| 36 | pressure difference sensor | 72 | second frequency converter |
| 40 | first thermometer | 74 | expansion valve |
| 42 | second thermometer | 100 | building |
| 44 | third thermometer | 102 | wireless communication connection |
| 46 | fourth thermometer | | |

## Claims

1. Ventilation equipment comprising a supply convector (10) and a supply fan (18) arranged to the flow path of the supply air, an exhaust convector (12) and an exhaust fan (20) arranged to the flow path of the exhaust air, a recovery convector (50) arranged to the flow path of the exhaust air, and a heat pump (60) comprising a first energy exchanger (62) and a second energy exchanger (64), which first energy exchanger (62) is connected to the recovery convector (50) with a recovery pipework (52), **characterised in that** the said ventilation equipment includes additionally a heat transfer pipework (24, 26) connecting the supply convector (10) and the exhaust convector, the heat transfer pipework (24, 26) comprising a first pump (34) and valves (28, 29) in order to circulate heat transfer fluid through the supply convector (10) and the exhaust convector (12), and a control device (32) for controlling the operation of said supply fan and the exhaust fan (18, 20), the valves (28, 29) and the first pump (34), and said second energy exchanger (64) is connected to the said heat transfer pipework (24, 26).

2. Ventilation equipment according to claim 1, **characterised in that** the recovery pipework (52) has a second pump (54) and a third valve (53) in order to adjust the flow rate of the liquid circulating in the recovery pipework.

3. Ventilation equipment according to claim 1 or 2, **characterised in that** the said recovery convector (50) is arranged on the flow path of the exhaust air in the flow direction of the exhaust air after the exhaust convector (12).

4. Ventilation equipment according to any of the claims 1 to 3, **characterised in that** the said second energy exchanger (64) is attached to the said heat transfer pipework (24, 26) in the flow direction of the heat transfer fluid in front of the supply convector (10).

5. Ventilation equipment according to any of the claims 1 to 4, **characterised in that** the heat pump (60) can be set into heating mode in which the heat pump (60) is configured to receive heat energy from the recovery pipework (52) with the first energy exchanger (62) and to release heat energy to the heat transfer pipework (24, 26) with the second energy exchanger (64).

6. Ventilation equipment according to any of the claims 1 to 5, **characterised in that** the heat pump (60) can be set into cooling mode in which the heat pump (60) is configured to receive heat energy from the heat transfer pipework (24, 26) with the second energy exchanger (64) and to release heat energy to the recovery pipework (52) with the first energy exchanger (64).

7. Ventilation equipment according to any of the claims 1 to 6, **characterised in that** the said heat pump (60) comprises a refrigerant pipework (66) connecting the first energy exchanger (62) and the second energy exchanger (64) for circulating refrigerant and a shuttle valve (68) for changing and setting the flow direction of the refrigerant.

8. Ventilation equipment according to any of the claims 1 to 7, **characterised in that** the said heat transfer pipework comprises a first intermediate pipe (25) and a first valve (28) for directing the heat transfer fluid to flow past the supply convector (10).

9. Ventilation equipment according to any of the claims 1 to 8, **characterised in that** the said heat transfer pipework additionally comprises a second intermediate pipe (27) and a second valve (29) for directing the heat transfer fluid to flow past the exhaust convector (12).

10. Ventilation equipment according to claim 9, **characterised in that** the said control device (32) is configured to direct the heat transfer fluid to flow past the exhaust convector (12) when the heat pump (60) is in cooling mode.

11. Ventilation equipment according to any of the claims 1 to 10, **characterised in that** the equipment additionally comprises a fourth thermometer (46) for measuring the temperature of the supply air that has flowed through the supply convector (10) and the said control device (32) is configured to control the operation of the equipment so that the measured temperature of the supply air is changed towards the target temperature set for the supply air.

12. A method of operating the ventilation equipment according to any of the claims 1-11 in which method exhaust air is led out of the building through the exhaust convector (12) and the recovery convector (50), supply air is led into the building through the supply convector (10) and heat transfer fluid is circulated in the heat transfer pipework (24, 26), **characterised in that**, in the method, the temperature of the heat transfer fluid flowing to the supply convector (10) is raised or lowered by using the heat pump (60).

13. The method according to claim 12, **characterised in that** when raising the temperature of the heat transfer fluid flowing to the supply convector (10), the heat pump is set to heating mode in which the refrigerant circulates in the first flow direction in the heat pump, and when lowering the temperature of the heat transfer fluid flowing to the supply convector (10), the heat pump is set to cooling mode in which the refrigerant circulates in the second flow direction in the heat pump.

14. The method according to claim 12 or 13, **characterised in that** a target temperature is set for the supply air that has flowed through the supply convector (10), the actual temperature of the supply air that has flowed through the supply convector is measured and the operation of the equipment is controlled so that the measured temperature of the supply air comes close to the target temperature.

15. The method according to claim 13 or 14, **characterised in that** the heat transfer fluid is directed to flow past the exhaust convector (12) when the heat pump (60) is in cooling mode.

## Patentansprüche

1. Lüftungsausrüstung, umfassend einen Zuluftkonvektor (10) und einen Zuluftventilator (18), die im Strömungsweg der Zuluft angeordnet sind, einen Abluftkonvektor (12) und einen Abluftventilator (20), die im Strömungsweg der Abluft angeordnet sind, einen Wärmerückführungskonvektor (50), der im Strömungsweg der Abluft angeordnet ist, und eine Wärmepumpe (60) mit einem ersten Energieaustauscher (62) und einem zweiten Energieaustauscher (64) einschließen, wobei der erste Wärmetauscher (62) über eine Rückführungsleitung (52) mit dem Rückführungskonvektor (50) verbunden ist, **dadurch gekennzeichnet, dass** die Lüftungsausrüstung zusätzlich eine Wärmeübertragungsleitung (24, 26) einschließt, die den Zuluftkonvektor (10) und den Abluftkonvektor verbindet, wobei die Wärmeübertragungsleitung (24, 26) umfassend eine erste Pumpe (34) und Ventile (28, 29), um Wärmeübertragungsfluid durch den Zuluftkonvektor (10) und den Abluftkonvektor (12) zirkulieren zu lassen, und eine Steuervorrichtung (32) zum Steuern des Betriebs des Zuluftventilators und des Abluftventilators (18, 20), wobei die Ventile (28, 29) und die erste Pumpe (34) sowie der zweite Energieaustauscher (64) mit der Wärmeübertragungsleitung (24, 26) verbunden sind.

2. Lüftungsausrüstung nach Anspruch 1, **dadurch gekennzeichnet, dass** die Rückführungsleitung (52) eine zweite Pumpe (54) und ein drittes Ventil (53) aufweist, um die Strömungsrate der in der Rückführungsleitung zirkulierenden Flüssigkeit anzupassen.

3. Lüftungsausrüstung zur Lüftung nach Anspruch 1 oder 2, **dadurch gekennzeichnet, dass** der Rückführungskonvektor (50) im Strömungsweg der Abluft in Strömungsrichtung der Abluft hinter dem Abluftkonvektor (12) angeordnet ist.

4. Lüftungsausrüstung nach einem der Ansprüche 1 bis 3, **dadurch gekennzeichnet, dass** der zweite Energieaustauscher (64) in Strömungsrichtung des Wärmeübertragungsfluids vor dem Zuluftkonvektor (10) an der Wärmeübertragungsleitung (24, 26) angebracht ist.

5. Lüftungsausrüstung nach einem der Ansprüche 1 bis 4, **dadurch gekennzeichnet, dass** die Wärmepumpe (60) in einen Heizmodus versetzt werden kann, in dem die Wärmepumpe (60) so konfiguriert ist, dass sie mit dem ersten Energieaustauscher (62) Wärmeenergie aus der Rückführungsleitung (52) aufnimmt und mit dem zweiten Energieaustauscher (64) Wärmeenergie an die Wärmeübertragungsleitung (24, 26) abgibt.

6. Lüftungsausrüstung nach einem der Ansprüche 1 bis 5, **dadurch gekennzeichnet, dass** die Wärmepumpe (60) in einen Kühlmodus versetzt werden kann, in dem die Wärmepumpe (60) so konfiguriert ist, dass sie mit dem zweiten Energieaustauscher (64) Wärmeenergie aus der Wärmeübertragungsleitung (24, 26) aufnimmt und mit dem ersten Energieaustauscher (64) Wärmeenergie an die Rückführungsleitung (52) abgibt.

7. Lüftungsausrüstung nach einem der Ansprüche 1 bis 6, **dadurch gekennzeichnet, dass** die Wärmepumpe (60) eine Kältemittelleitung (66) umfasst, die den ersten Energieaustauscher (62) und den zweiten Energieaustauscher (64) zum Zirkulieren des Kältemittels verbindet, sowie ein Wechselventil (68) zum Ändern und Einstellen der Strömungsrichtung des Kältemittels.

8. Lüftungsausrüstung nach einem der Ansprüche 1 bis 7, **dadurch gekennzeichnet, dass** die Wärmeübertragungsleitung ein erstes Zwischenrohr (25) und ein erstes Ventil (28) umfasst, um das Wärmeübertragungsfluid so zu leiten, dass es am Zuluftkonvektor (10) vorbeiströmt.

9. Lüftungsausrüstung nach einem der Ansprüche 1 bis 8, **dadurch gekennzeichnet, dass** die Wärmeübertragungsleitung zusätzlich ein zweites Zwischenrohr (27) und ein zweites Ventil (29) umfasst, um das Wärmeübertragungsfluid so zu leiten, dass es am Abluftkonvektor (12) vorbeiströmt.

10. Lüftungsausrüstung nach Anspruch 9, **dadurch gekennzeichnet, dass** die Steuervorrichtung (32) so konfiguriert ist, dass sie das Wärmeübertragungsfluid so leitet, dass es am Abluftkonvektor (12) vorbeiströmt, wenn sich die Wärmepumpe (60) im Kühlmodus befindet.

11. Lüftungsausrüstung nach einem der Ansprüche 1 bis 10, **dadurch gekennzeichnet, dass** die Ausrüstung zusätzlich ein viertes Thermometer (46) zum Messen der Temperatur der Zuluft umfasst, die durch den Zuluftkonvektor (10) geströmt ist, und dass die Steuervorrichtung (32) so konfiguriert ist, dass sie den Betrieb der Ausrüstung so steuert, dass die gemessene Temperatur der Zuluft in Richtung der für die Zuluft eingestellten Solltemperatur verändert wird.

12. Verfahren zum Betreiben der Lüftungsausrüstung nach einem der Ansprüche 1 bis 11, bei dem Abluft durch den Abluftkonvektor (12) und den Rückführungskonvektor (50) aus dem Gebäude abgeleitet wird, Zuluft durch den Zuluftkonvektor (10) in das Gebäude geleitet wird und Wärmeübertragungsfluid in der Wärmeübertragungsleitung (24, 26) zirkuliert wird, **dadurch gekennzeichnet, dass** bei dem Verfahren die Temperatur des zum Zuluftkonvektor (10) fließenden Wärmeübertragungsfluids unter Verwendung der Wärmepumpe (60) erhöht oder gesenkt wird.

13. Verfahren nach Anspruch 12, **dadurch gekennzeichnet, dass** beim Erhöhen der Temperatur des zum Zuluftkonvektor (10) fließenden Wärmeübertragungsfluids die Wärmepumpe in den Heizmodus versetzt wird, in dem das Kältemittel in der Wärmepumpe in der ersten Strömungsrichtung zirkuliert, und beim Senken der Temperatur des zum Zuluftkonvektor (10) fließenden Wärmeübertragungsfluids die Wärmepumpe in den Kühlmodus versetzt wird, in dem das Kältemittel in der Wärmepumpe in der zweiten Strömungsrichtung zirkuliert.

14. Verfahren nach Anspruch 12 oder 13, **dadurch gekennzeichnet, dass** eine Solltemperatur für die durch den Zuluftkonvektor (10) geströmte Zuluft eingestellt wird, die Ist-Temperatur der durch den Zuluftkonvektor geströmten Zuluft gemessen wird und die Steuerung der Ausrüstung so gesteuert wird, dass die gemessene Temperatur der Zuluft nahe an die Solltemperatur herankommt.

15. Verfahren nach Anspruch 13 oder 14, **dadurch gekennzeichnet, dass** das Wärmeübertragungsfluid so geleitet wird, dass es am Abluftkonvektor (12) vorbeiströmt, wenn sich die Wärmepumpe (60) im Kühlmodus befindet.

## Revendications

1. Équipement de ventilation comprenant un convecteur d'alimentation (10) et un ventilateur d'alimentation (18) disposés sur le trajet d'écoulement de l'air d'alimentation, un convecteur d'échappement (12) et un ventilateur d'échappement (20) disposés sur le trajet d'écoulement de l'air d'échappement, un convecteur de récupération (50) disposé sur le trajet d'écoulement de l'air d'échappement, et une pompe à chaleur (60) comprenant un premier échangeur d'énergie (62) et un second échangeur d'énergie (64), lequel premier échangeur d'énergie (62) est relié au convecteur de récupération (50) par une tuyauterie de récupération (52), **caractérisé en ce que** ledit équipement de ventilation comporte additionnellement une tuyauterie caloporteuse (24, 26) reliant le convecteur d'alimentation (10) et le convecteur d'échappement, la tuyauterie caloporteuse (24, 26) comprenant une première pompe (34) et des vannes (28, 29) afin de faire circuler le fluide caloporteur à travers le convecteur d'alimentation (10) et le convecteur d'échappement (12), et un dispositif de commande (32) pour commander le fonctionnement dudit ventilateur d'alimentation et du ventilateur d'échappement (18, 20), des vannes (28, 29) et de la première pompe (34), et ledit second échangeur d'énergie (64) est relié à ladite tuyauterie caloporteuse (24, 26).

2. Équipement de ventilation selon la revendication 1, **caractérisé en ce que** la tuyauterie de récupération (52) a une seconde pompe (54) et une troisième vanne (53) afin d'ajuster le débit du liquide circulant dans la tuyauterie de récupération.

3. Équipement de ventilation selon la revendication 1 ou 2, **caractérisé en ce que** ledit convecteur de récupération (50) est disposé sur le trajet d'écoulement de l'air d'échappement dans le sens d'écoulement de l'air d'échappement après le convecteur d'échappement (12).

4. Équipement de ventilation selon l'une quelconque des revendications 1 à 3, **caractérisé en ce que** ledit second échangeur d'énergie (64) est fixé à ladite tuyauterie caloporteuse (24, 26) dans le sens d'écoulement du fluide caloporteur devant le convecteur d'alimentation (10).

5. Équipement de ventilation selon l'une quelconque des revendications 1 à 4, **caractérisé en ce que** la pompe à chaleur (60) peut être réglée en mode chauffage dans lequel la pompe à chaleur (60) est configurée pour recevoir de l'énergie thermique de la tuyauterie de récupération (52) avec le premier échangeur d'énergie (62) et pour libérer de l'énergie thermique dans la tuyauterie caloporteuse (24, 26) avec le second échangeur d'énergie (64).

6. Équipement de ventilation selon l'une quelconque des revendications 1 à 5, **caractérisé en ce que** la pompe à chaleur (60) peut être réglée en mode refroidissement dans lequel la pompe à chaleur (60) est configurée pour recevoir de l'énergie thermique de la tuyauterie caloporteuse (24, 26) avec le second échangeur d'énergie (64) et pour libérer de l'énergie thermique dans la tuyauterie de récupération (52) avec le premier échangeur d'énergie (64).

7. Équipement de ventilation selon l'une quelconque des revendications 1 à 6, **caractérisé en ce que** ladite pompe à chaleur (60) comprend une tuyauterie de réfrigérant (66) reliant le premier échangeur d'énergie (62) et le second échangeur d'énergie (64) pour la circulation du réfrigérant et une vanne navette (68) pour changer et régler le sens d'écoulement du réfrigérant.

8. Équipement de ventilation selon l'une quelconque des revendications 1 à 7, **caractérisé en ce que** ladite tuyauterie caloporteuse comprend un premier tuyau intermédiaire (25) et une première vanne (28) pour diriger le fluide caloporteur pour qu'il s'écoule vers le convecteur d'alimentation (10).

9. Équipement de ventilation selon l'une quelconque des revendications 1 à 8, **caractérisé en ce que** ladite tuyauterie caloporteuse comprend additionnellement un second tuyau intermédiaire (27) et une deuxième vanne (29) pour diriger le fluide caloporteur pour qu'il s'écoule vers le convecteur d'échappement (12).

10. Équipement de ventilation selon la revendication 9, **caractérisé en ce que** ledit dispositif de commande (32) est configuré pour diriger le fluide caloporteur pour qu'il s'écoule vers le convecteur d'échappement (12) lorsque la pompe à chaleur (60) est en mode refroidissement.

11. Équipement de ventilation selon l'une quelconque des revendications 1 à 10, **caractérisé en ce que** l'équipement comprend additionnellement un quatrième thermomètre (46) pour mesurer la température de l'air d'alimentation qui s'est écoulé à travers le convecteur d'alimentation (10) et ledit dispositif de commande (32) est configuré pour commander le fonctionnement de l'équipement de sorte que la température mesurée de l'air d'alimentation est modifiée vers la température cible réglée pour l'air d'alimentation.

12. Procédé de fonctionnement de l'équipement de ventilation selon l'une quelconque des revendications 1 à 11 dans lequel procédé l'air d'échappement est mené hors du bâtiment par le convecteur d'échappement (12) et le convecteur de récupération (50), l'air d'alimentation est mené dans le bâtiment par le convecteur d'alimentation (10) et un fluide caloporteur circule dans la tuyauterie caloporteuse (24, 26), **caractérisé en ce que**, dans le procédé, la température du fluide caloporteur s'écoulant vers le convecteur d'alimentation (10) est augmentée ou diminuée en utilisant la pompe à chaleur (60).

13. Procédé selon la revendication 12, **caractérisé en ce que** lors de l'augmentation de la température du fluide caloporteur s'écoulant vers le convecteur d'alimentation (10), la pompe à chaleur est réglée en mode chauffage dans lequel le réfrigérant circule dans le premier sens d'écoulement dans la pompe à chaleur, et lors de la diminution de la température du fluide caloporteur s'écoulant vers le convecteur d'alimentation (10), la pompe à chaleur est réglée en mode refroidissement dans lequel le réfrigérant circule dans le second sens d'écoulement dans la pompe à chaleur.

14. Procédé selon la revendication 12 ou 13, **caractérisé en ce qu'**une température cible est réglée pour l'air d'alimentation qui s'est écoulé à travers le convecteur d'alimentation (10), la température réelle de l'air d'alimentation qui s'est écoulé à travers le convecteur d'alimentation est mesurée et le fonctionnement de l'équipement est commandé de sorte que la température mesurée de l'air d'alimentation se rapproche de la température cible.

15. Procédé selon la revendication 13 ou 14, **caractérisé en ce que** le fluide caloporteur est dirigé pour s'écouler vers le convecteur d'échappement (12) lorsque la pompe à chaleur (60) est en mode refroidissement.
